# FASCICULE DE BREVET EUROPEEN

(11) **EP 3 263 813 B1**
(45) Date de publication et mention de la délivrance du brevet: **30.11.2022**
(21) Numéro de dépôt: 17178942.3
(22) Date de dépôt: 30.06.2017
(51) Int. Cl.: E05D 5/02, F16B 7/04, F16B 7/18

(54) **DISPOSITIF DE FIXATION D'UNE FERRURE DANS UNE RAINURE EN T DE MENUISERIE**
BEFESTIGUNGSVORRICHTUNG EINES BESCHLAGS IN EINEM T-FÖRMIGEN RAHMENFALZ
DEVICE FOR SECURING A FITTING IN A T-SHAPED JOINERY GROOVE

(30) Priorité: 01.07.2016 FR 1656326; 27.09.2016 FR 1659111
(43) Date de publication de la demande: 03.01.2018
(73) Titulaire: FERCO, 57445 Reding (FR)
(72) Inventeur: FEITH, Roland, 57410 Bining (FR)
(74) Mandataire: Cabinet Bleger-Rhein-Poupon

(56) Documents cités:
- EP-A1- 1 426 633
- EP-A1- 2 246 577
- EP-A1- 3 141 683
- EP-A2- 2 159 356
- DE-A1- 4 243 185

## Description

L'invention concerne un dispositif pour la fixation d'une ferrure dans une rainure en T d'une menuiserie de type cadre dormant ou ouvrant, rainure délimitée par au moins un fond et deux parois latérales pourvues, chacune, d'au moins un rebord d'accrochage distant du fond, ce dispositif comprenant des moyens de prémontage et prépositionnement, notamment par clippage, dans ladite rainure en T, pour assurer un maintien au moins temporaire de la ferrure dans cette rainure au moins suivant la direction d'emboîtement dans cette dernière.

La présente invention concerne le domaine de la quincaillerie du bâtiment et a trait, particulièrement, aux dispositifs destinés à contribuer à la fixation d'une ferrure quelconque dans une rainure en T. De telles rainures sont généralement ménagées dans des profilés en matériau synthétique ou métallique, notamment en aluminium, pour la conception de menuiseries du bâtiment, par exemple le cadre dormant et/ou le châssis ouvrant d'une porte, fenêtre ou similaires.

De manière usuelle, les ferrures de type ferrures de verrouillage, d'articulation ou similaires, sont très souvent rapportées par vissage sur les menuiseries. Lorsque ces menuiseries sont réalisées à partir de profilés, que ceux-ci soient en matériau synthétique, notamment en PVC ou en aluminium, l'ancrage de ces ferrures sur ces profilés dépend très largement de la qualité de pose des vis de fixation. En effet, tenant compte de la nature même de ces matériaux, un vissage avec une force de serrage excessive peut endommager les filets imprimés par les vis dans la matière plastique ou dans l'aluminium, altérant inévitablement, la qualité de fixation de la ferrure.

Certains profilés en matériau synthétique sont renforcés, intérieurement, par des profilés métalliques qui favorisent l'accrochage de ces organes de fixation sous forme de vis. Finalement pour répondre au problème posé il conviendrait de renforcer systématiquement les profilés de menuiserie de tels profilés métalliques ce qui représente bien évidemment un coût.

Pour éviter l'usage d'organes de fixation sous forme de vis, l'on a d'ores et déjà imaginé de faire appel à d'autres moyens de fixation qui, plutôt que d'assurer un ancrage par vissage dans la matière, assure la fixation d'une ferrure dans une rainure de profil en mettant à profit la structure même de ladite rainure.

A ce propos, ces rainures pour accueillir les ferrures de verrouillage, d'articulation ou autres, dans des profilés aluminium ou en PVC de menuiserie adoptent, généralement, une forme en T et sont délimitées, intérieurement, par un fond d'où s'étendent des parois latérales portant chacune un rebord d'accrochage s'étendant à une distance déterminée du fond en direction du plan médian longitudinal de ladite rainure.

Fréquemment, ces moyens de fixation procurent un effet de serrage de la ferrure sur ces rebords d'accrochage en venant s'insérer sous ces derniers, intérieurement à la rainure.

Ces moyens de fixation, encore dénommés clameau, se présentent sous forme d'un écrou ayant, dans une première direction, une largeur inférieure à la largeur de passage dans la rainure entre lesdits rebords d'accrochage et, dans une seconde direction, souvent perpendiculaire, une largeur supérieure à cette largeur de passage, tout en étant supérieure à la largeur de la rainure en T, ceci afin d'assurer son blocage en rotation. Une vis de fixation traversant une ouverture dans la ferrure destinée à être fixée sur ou dans la rainure, est en prise avec cet écrou ou clameau. Ainsi, après avoir positionné ladite ferrure sur cette rainure tout en ayant assuré l'engagement de l'écrou dans cette dernière grâce à sa largeur adaptée à la largeur de passage entre les rebords d'accrochage, la commande en rotation de la vis de serrage entraîne, sous l'effet des forces de frottement, la rotation de l'écrou, qui, étant plus long que large, s'étend sous les rebords d'accrochage. Le blocage en rotation de l'écrou découle de sa coopération avec les parois latérales de la rainure de sorte qu'en poursuivant le vissage s'opère le serrage de cet écrou sur les rebords d'accrochage de la rainure.

Lorsque la ferrure, par exemple, une crémone, est équipée de plusieurs de ces moyens de fixation, sous forme de clameau, il est nécessaire que chacun de ces clameaux soit parfaitement orienté pour pouvoir convenablement emboîter cette crémone, sur l'ensemble de sa longueur, sur la rainure prévue à cet effet sur la menuiserie. Un certain nombre de documents de l'état de la technique apporte des solutions pour répondre à ce problème.

Ainsi il est tout particulièrement connu par le document DE-U-20 2010 013011, un dispositif de fixation pour ferrure consistant en un clameau dont l'immobilisation en rotation par rapport à ladite ferrure est assurée au moyen d'un joint torique, habituellement dénommé O-Ring.

Cependant, une telle solution technique n'est pas satisfaisante, dans la mesure où l'effet de serrage susceptible d'être obtenu au moyen du clameau est limité à la compressibilité du joint O-Ring.

Il est par ailleurs connu, par le document EP-2 159 356, un dispositif de fixation à clameau où l'écrou correspondant à ce clameau est maintenu immobilisé en rotation par une pièce dite d'aide au montage conformée à partir d'une lame élastique. Selon le mode de réalisation envisagé, cette pièce de montage a pour fonction essentielle, d'une part, d'assurer le maintien du clameau dans une position permettant son engagement dans la rainure de la menuiserie et, d'autre part, le repousser élastiquement par rapport à la face d'appui au travers de laquelle la ferrure vient se positionner sur la rainure.

L'intérêt de maintenir, ainsi, élastiquement écarté le clameau de la ferrure a pour but de garantir l'engagement du clameau sous les rebords d'accrochage de ladite rainure avant que ne s'opère le serrage.

Quels que soient ces moyens de fixation à clameau de l'état de la technique, il est systématiquement fait appel à une pièce additionnelle pour assurer cette fonction de maintien du clameau dans une position prédéfinie pour autoriser le montage.

On notera, à ce sujet, que cette pièce additionnelle telle que décrite dans le document EP-2 159 356 présente des caractéristiques complexes pour assurer le maintien du clameau, non seulement dans une position angulaire définie, mais aussi à distance de la face d'appui de la ferrure, garant de l'engagement du clameau sous les rebords d'accrochage.

A cela il faut ajouter que la fonction de fixation que doivent assurer ces moyens de fixation sous forme de clameaux n'intervient qu'après vissage et serrage. En aucun cas ces moyens de fixation selon l'état de la technique ne sont en mesure d'assurer un positionnement temporaire de la ferrure sur la menuiserie. Par positionnement temporaire on entend un maintien en position de la ferrure le long de la rainure en T, après son emboîtement sur cette dernière, de sorte que cette ferrure puisse conserver cette position sans intervention de l'opérateur jusqu'à serrage des moyens de fixation.

Il est encore connu par le document EP 2 246 577 un dispositif de fixation à clameau pour profil à rainure en T. Le problème que souhaite solutionner ce dispositif consiste à assurer une fixation rapide d'un panneau ou similaire sur de tels profil, tout en permettant un repositionnement aisé.

Ce dispositif connu nécessite d'être enfilé depuis une extrémité dans une telle rainure et ne comporte pas de moyens permettant d'assurer un prémontage et un prépositionnement, par simple emboitement dans ladite rainure en T suivant une direction perpendiculaire à l'axe de cette dernière. Autrement dit, appliqué à une ferrure, ce dispositif connu ne permet pas de rapporter celle-ci sur la rainure par emboîtement, perpendiculairement, dans cette dernière et maintenir au moins temporairement cette ferrure contre tout risque de déboitement, voire de déplacement inopiné, axialement, le long de cette rainure, c'est-à-dire sans intervention volontaire de l'opérateur. Ce pré positionnement au sens décrit dans le document EP 2 246 577, à savoir avec un repositionnement possible, impose de repousser le clameau contre l'action de lames élastiques qui le maintiennent en position inactive en collaboration avec des languettes de retenue, précisément pour échapper à ces dernières avant de pouvoir commander la rotation de ce clameau et son engagement sous les rebords de la rainure en T.

Il existe, d'ores et déjà, de tels moyens de prémontage et prépositionnement d'une ferrure, notamment d'une crémone, sur de telles rainures en T de menuiserie en profilés métalliques ou synthétiques. Ces moyens de prémontage et prépositionnement, généralement sous forme d'une pièce de montage en matière plastique montée sous ladite ferrure, ont pour fonction essentielle, souvent à l'aide de lames élastiques déformables, de maintenir la ferrure en applique sur la rainure, c'est-à-dire dans la direction de montage de cette ferrure dans cette rainure, direction perpendiculaire à l'axe de la rainure, mais aussi de l'immobiliser longitudinalement dans cette dernière. Cette immobilisation est assurée sous l'effet d'un engagement légèrement sous contrainte de la pièce de montage perpendiculairement dans la rainure.

A noter que ces moyens de prémontage et prépositionnement peuvent assurer, ainsi, une immobilisation de manière réversible ou irréversible de la ferrure dans la rainure. L'irréversibilité concerne habituellement la direction de montage de la ferrure dans la rainure, donc perpendiculaire à l'axe de cette dernière, tandis que, dans la direction longitudinale, il ne s'agit souvent, que d'une immobilisation sous contrainte, autorisant un repositionnement longitudinal de la ferrure dans cette rainure.

Comme indiqué précédemment, ces moyens de prémontage et prépositionnement se présentent souvent sous forme d'une pièce injectée en matériau synthétique.

Le document DE4243185 A1 décrit un dispositif de fixation d'une ferrure comprenant un clameau et des moyens de prémontage et prépositionnement.

C'est dans le cadre d'une démarche inventive que l'on a imaginé associer à des moyens de fixation à clameau des moyens de prémontage et prépositionnement par emboîtement de la ferrure sur une rainure en T perpendiculairement à l'axe de cette dernière, moyens comportant, en combinaison des moyens d'immobilisation temporaire du clameau en position de montage de la ferrure sur la rainure.

Selon une caractéristique additionnelle de l'invention, de tels moyens de prémontage et prépositionnement comportent encore des moyens de réception et de maintien pour solidariser le clameau au moins dans sa position inactive sur ces moyens de prémontage et prépositionnement, indépendamment de la vis de serrage.

Selon une autre particularité de l'invention, le dispositif de fixation comporte des moyens formant une butée temporaire pour maintenir le clameau dans une position desserrée, dans sa position inactive d'engagement dans la rainure en T.

En somme, le clameau peut être associé à ce moyen de montage temporaire de sorte qu'il puisse être rapporté par l'intermédiaire de ce dernier sur la ferrure et/ou maintenu sur cette ferrure indépendamment de la présence ou non de la vis de serrage.

En effet, cette vis de serrage est habituellement indispensable pour maintenir le clameau sur la ferrure. Aussi, lors de l'assemblage de cette dernière, les deux doivent être conjointement rapportés ensemble sur la ferrure.

Selon l'invention, le clameau peut être rapporté sur la ferrure au travers des moyens de prémontage et prépositionnement, que ce soit au moment de fixer ces derniers sur ladite ferrure ou après.

La solution selon l'invention facilite, considérablement, l'équipement, de manière automatisée, d'une ferrure de ces moyens de prémontage et prépositionnement et des moyens de fixation à clameau. A noter d'ailleurs que les vis de serrage peuvent n'être posées sur la ferrure qu'au moment du montage et de la fixation de cette dernière sur une menuiserie.

Selon encore une autre caractéristique de l'invention, à ces moyens de prémontage et prépositionnement sont associés des moyens intercalaires d'isolation destinés à s'interposer entre le clameau et le profil de menuiserie.

Ainsi, dans le cas d'un profil de menuiserie en matériau métallique, notamment en aluminium à coupure de pont thermique, cette coupure de pont thermique entre l'intérieur et l'extérieur du profil intervient habituellement au niveau de cette rainure de section en T de réception des éléments de ferrure. Aussi, l'une des parois latérales et son rebord d'accrochage, délimitant l'un des côtés de la rainure en T du profil, se situent nécessairement du côté externe de ce dernier tandis que l'autre paroi latérale et son rebord d'accrochage se situent du côté interne, normalement thermiquement isolé du précédent. Jusqu'alors, le clameau, souvent en matériau métallique pour sa résistance mécanique, constituait un pont thermique, problème que l'invention sait également résoudre au travers d'une seule pièce unique définissant les moyens de prémontage et prépositionnement auxquels sont associés les moyens de fixation à clameau pour la conception du dispositif de fixation selon l'invention.

A cet effet, l'invention concerne un dispositif pour la fixation d'une ferrure dans une rainure en T d'une menuiserie de type cadre dormant ou ouvrant, rainure délimitée par au moins un fond et deux parois latérales pourvues, chacune, d'au moins un rebord d'accrochage distant du fond, comprenant :
- des moyens de prémontage et prépositionnement par clippage dans ladite rainure en T perpendiculairement à l'axe de cette dernière, pour assurer un maintien au moins temporaire de la ferrure dans cette rainure au moins suivant cette direction d'emboîtement perpendiculaire dans cette dernière ;
- et des moyens de serrage sous forme d'un clameau, pour coopérer avec lesdits rebords d'accrochage, ce clameau étant susceptible d'occuper au moins une première position autorisant son engagement entre ces rebords d'accrochage et au moins une seconde position dans laquelle il s'étend sous lesdits rebords d'accrochage ;
- et des moyens de retenue en rotation escamotables du clameau dans ladite première position inactive ;
caractérisé en ce qu'il comporte des moyens intercalaires d'isolation définis pour venir s'interposer entre le clameau et les rebords d'accrochage, ces moyens intercalaires d'isolation consistant en des jupes déformables s'étendant sous une embase, de part et d'autre du plan médian longitudinal des moyens de prémontage et prépositionnement.

Selon une autre particularité de la présente invention, les moyens de prémontage et prépositionnement comportent encore des moyens de réception et de maintien pour solidariser le clameau au moins dans sa position inactive sur ces moyens de prémontage et prépositionnement, indépendamment de la vis de serrage.

Avantageusement, ce dispositif de fixation comporte des moyens formant une butée temporaire pour maintenir le clameau dans une position desserrée, dans sa position inactive d'engagement dans la rainure en T.

Selon une autre particularité de la présente invention, il comporte des moyens intercalaires d'isolation définis pour venir s'interposer entre le clameau et les rebords d'accrochage de la rainure en T.

Tel qu'exposé plus haut, les avantages découlant de la présente invention consistent en ce que le dispositif de fixation est, non seulement, susceptible d'assurer un prémontage et prépositionnement d'une ferrure le long d'une rainure en T d'une menuiserie, ceci par emboitement perpendiculairement dans cette rainure, mais aussi sa fixation par clameau dans cette dernière, tout en rendant le prémontage aisé au travers du maintien du clameau dans une position prédéterminée.

La présente invention sera mieux comprise à la lecture de la description qui va suivre et des dessins ci-joints dans lesquels :
- La figure 1 est une illustration schématisée et en perspective d'un profilé de menuiserie à rainure en T en cours d'équipement d'une ferrure, notamment d'une crémone, pourvue d'un dispositif de fixation sans les moyens intercalaires d'isolation;
- La figure 2 est une représentation schématisée et en perspective de ce dispositif de fixation rapporté à l'arrière d'une ferrure sous forme d'une têtière, les moyens de serrage étant en position inactive de montage ;
- La figure 3 est une représentation similaire à la figure 2 illustrant les moyens de serrage en position active de fixation et de serrage ;
- La figure 4 étant une illustration schématisée en coupe du dispositif de fixation en position dans une rainure en T ;
- La figure 5 représente, en perspective, les moyens de prémontage et de prépositionnement du dispositif de fixation ;
- La figure 6 est une représentation similaire à la figure mais sous forme d'une illustration plus schématisée du dispositif de fixation , les moyens de prémontage et de prépositionnement étant représentés dans leur position d'emboîtée dans la rainure en T, tandis que les moyens de serrage sont dans leur position inactive de montage;
- La figure 7 illustre, de manière schématisée, les moyens assurant, simultanément, la retenue, de manière escamotable, du clameau dans sa position inactive de montage dans la rainure ;
- La figure 8 et la figure 9 illustrent de manière schématisée en coupe le dispositif de fixation selon l'invention et ses moyens intercalaires d'isolation thermique, d'une part, lorsque les moyens de serrage sont en position inactive de montage dans la rainure et, d'autre part, lorsque ces moyens sont dans leur position active de serrage.
- La figure 10 illustre, sous forme d'un second mode de réalisation et en perspective, les moyens de prémontage et de prépositionnement d'un dispositif de fixation non couvert par l'invention.
- La figure 11 est une représentation similaire à la figure 10, ces moyens de prémontage et de prépositionnement étant rapporté le clameau maintenu dans sa position inactive.

Telle que représentée dans les figures des dessins ci-joints, la présente invention concerne un dispositif 1 pour la fixation d'une ferrure 2, ici représentée sous forme d'une têtière, sur une rainure en T 3 dont sont très souvent pourvus les profils 4 en matériau synthétique ou de type métallique, de menuiserie, profils 4 constituant, par exemple, le cadre dormant et/ou le châssis d'un ouvrant de porte, fenêtre ou similaire.

A noter qu'une telle rainure en T 3 est délimitée de manière générale, par au moins un fond 5 d'où s'étendent deux parois latérales 6,7 pourvues, chacune, d'au moins un rebord d'accrochage 8,9 s'étendant, à distance du fond 5, en direction du plan médian longitudinal 10 de cette rainure en T 3.

Le dispositif de fixation 1 prévu pour équiper une telle ferrure 2, comporte, selon l'invention, des moyens de prémontage et prépositionnement 11 de cette ferrure 2 sur et le long de la rainure en T 3.

Ces moyens 11 sont ainsi définis pour assurer un maintien au moins temporaire de la ferrure 2 sur cette rainure 3 au moins suivant une direction d'emboîtement 12 dans cette dernière, c'est-à-dire perpendiculairement à l'axe de la rainure 3. En somme, la ferrure 2, en l'occurrence la têtière, est présentée au-devant de cette rainure 3 et appliquée perpendiculairement sur et dans cette dernière dans laquelle lesdits moyens contribuent à un prémontage et prépositionnement à cette ferrure au moins dans cette direction de montage. Avantageusement ils assurent en outre un maintien de cette ferrure 2 longitudinalement dans cette rainure 3.

Substantiellement, ces moyens de prémontage et prépositionnement 11 comportent au moins un embout d'emboîtement 13 représenté dans les figures de section en U, bien qu'il puisse adopter d'autres formes de réalisation. Cet embout d'emboîtement 13 est pourvu, au moins d'un côté, préférentiellement de part et d'autre, d'au moins un ergot de retenue 14, ici illustré sous forme de languette, susceptible de s'effacer élastiquement sous l'impulsion d'un rebord d'accrochage 8, 9 au moment de l'engagement, entre lesdits rebords d'accrochage 8, 9, de l'embout d'emboîtement 13 et, au contraire, de s' étendre sous un rebord d'accrochage 8,9 une fois l'embout d'emboîtement 13 engagé dans la rainure en T 3, notamment lorsque la ferrure 2 est amenée en appui sur cette dernière.

A noter, d'ailleurs, que ces moyens de prémontage et prépositionnement 11 sont avantageusement réalisés en matière synthétique et sont rapportés, préférentiellement par sertissage, collage, clipage ou autre, sous la ferrure 2. D'ailleurs, de manière avantageuse, ces moyens 11 comportent une embase 15 de fixation sous la ferrure 2.

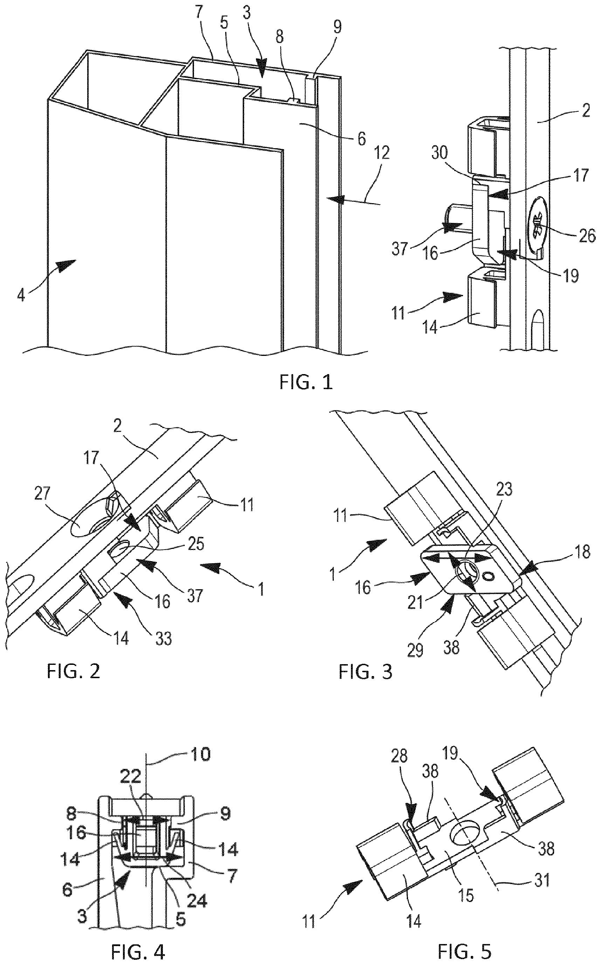

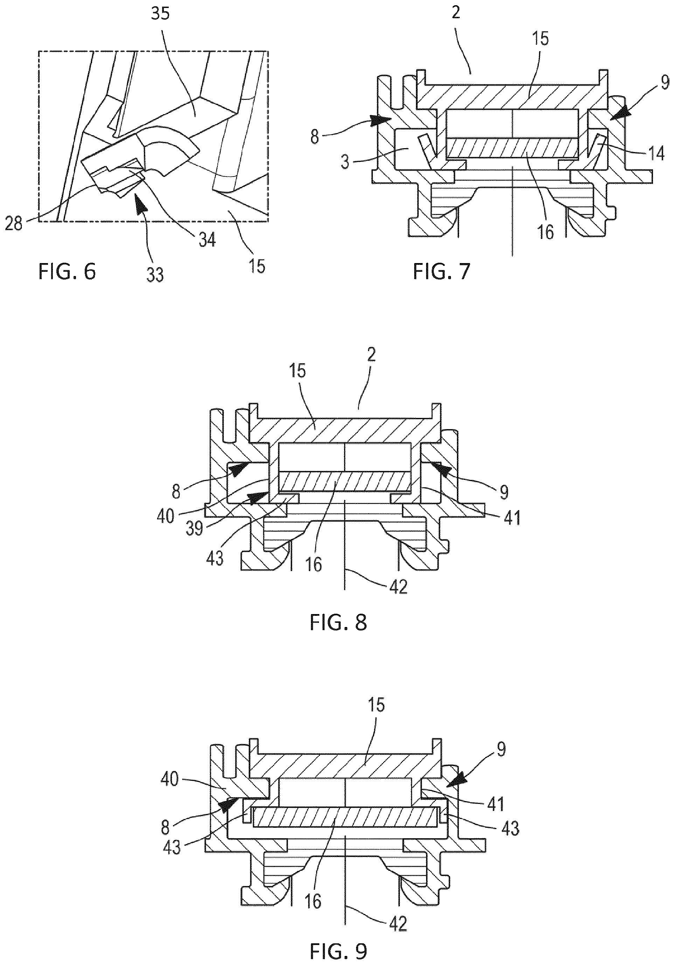

Les figures 4 et 6 illustrent, plus particulièrement, cette coopération des moyens de prémontage et prépositionnement 11 avec ladite rainure en T 3 pour maintenir la ferrure 2 sur et le long de cette dernière avant fixation définitive.

A ce propos, le dispositif de fixation 1 selon l'invention comporte encore des moyens de serrage 16 sous forme de clameau pour coopérer avec les rebords d'accrochage 8, 9. Ce clameau 16 est susceptible d'occuper au moins une position inactive 17 autorisant son engagement entre lesdits rebords d'accrochage 8, 9 et au moins une position active 18 dans laquelle il s'étend sous lesdits rebords d'accrochage 8, 9.

De manière particulière, le dispositif de fixation 1 comporte encore des moyens de retenue escamotable 19 du clameau 16 dans sa position inactive 17.

Substantiellement, un clameau, 16 se présente, comme connu par l'homme du métier, sous forme d'un écrou 20 sensiblement rectangulaire, d'une part, de largeur 21 inférieure à la largeur de passage 22 entre les rebords d'accrochage 8, 9 donnant accès à la rainure en T 3 et, d'autre part, de longueur 23 supérieure à cette largeur de passage 22, préférentiellement supérieure à la largeur 24 de la rainure en T 3 de sorte que, après engagement dans cette dernière, et en coopération avec les parois latérales 6, 7, le clameau 16 puisse être bloqué en rotation à l'intérieur de cette rainure en T 3.

Comme l'indique sa dénomination, ce clameau 16 en forme d'écrou 20 comporte un trou taraudé 25 pour la réception d'une vis de serrage 26 traversant la ferrure 2 au travers d'une ouverture 27 adaptée dans cette dernière.

De manière avantageuse, l'embase 15 des moyens de prémontage et prépositionnement 11 comporte lesdits moyens de retenue en rotation escamotable 19 définis pour maintenir le clameau 16 dans sa position inactive 17.

Ces moyens de retenue en rotation escamotables 19 peuvent adopter différentes formes de réalisation et sont représentés, dans un mode d'exécution préférentiel sur les figures 2 à 6, sous forme d'au moins une languette de retenue 28 définie pour coopérer avec la périphérie 29 du clameau 16, préférentiellement un coin de ce dernier, pour assurer cette fonction de retenue en rotation escamotable. En somme, cette languette de retenue 28, de par sa configuration, vient épouser le profil de cet angle 30 de l'écrou 20 lorsque celui-ci est dans sa position inactive 17. Ainsi, un effort de rotation volontairement appliqué sur le clameau 16 conduit l'angle 30 à s'échapper de cette languette de retenue 28.

Bien évidemment, on peut encore imaginer que cette languette 28 comporte un bossage ou un creux qui, en coopération avec un creux respectivement un bossage en périphérie du clameau 16 bloque en rotation ce dernier de manière escamotable. D'ailleurs d'autres solutions similaires sont à la portée de l'homme du métier au regard de l'information qui précède.

A noter que le couple de rotation imprimé au clameau 16 peut résulter d'une contrainte de vissage de la vis de serrage 26 dans le trou taraudé 25. En particulier, sur la vis de serrage 26 et/ou dans le trou taraudé 25 peut être appliqué un revêtement d'où résulte cette contrainte au vissage. Bien entendu, l'invention n'est nullement limitée à un tel mode de réalisation et d'autres solutions sont envisageables pour imprimer au clameau 16 un couple de rotation lui permettant de se libérer de la ou des languettes de retenue 28 en vue de quitter sa position inactive 17 et atteindre sa position active 18.

Une telle contrainte de vissage permet, éventuellement, après desserrage, d'assurer l'entrainement en rotation du clameau 16 depuis sa position active 18 dans sa position inactive 17, dans laquelle ce clameau 16 peut passer entre les rebords d'accrochage 8, 9 pour autoriser le retrait de la ferrure 2 par rapport à la rainure en T 3.

De manière avantageuse, les moyens de prémontage et prépositionnement 11 adoptent une configuration symétrique par rapport à un plan médian transversal 31, par exemple à hauteur d'une ouverture 32 dans l'embase 15 servant au passage de la vis de serrage 26.

Ainsi, au niveau de cette embase 15 peuvent s'étendre plusieurs languettes de retenue 28 pour assurer cette fonction d'indexage et de retenue en rotation du clameau 16 dans sa position inactive 17.

Selon encore une autre caractéristique de l'invention, le dispositif de fixation 1 selon l'invention comporte encore des moyens de réception et de maintien 33 du clameau 16 ayant pour fonction essentielle de pouvoir positionner ce clameau 16 sur les moyens de prémontage et prépositionnement 11 et le solidariser de ces derniers indépendamment de la vis de serrage 26.

Ces moyens de réception et de maintien 33 sont définis pour maintenir le clameau 16 au moins lorsqu'il est dans sa position inactive 17 en vue de l'engagement dans la rainure en T 3.

Selon un exemple de réalisation, lesdits moyens de réception et de maintien 33 sont constitués par au moins deux languettes de retenue 28 agissant sensiblement de manière diamétralement opposée sur ce clameau 16 et par au moins une butée de retenue 34 susceptible de s'opposer au dégagement de ce clameau 16 par rapport aux moyens de prémontage et prépositionnement 11, ceci dans une direction opposée à l'embase 15.

Une telle butée de retenue 34 est avantageusement ménagée au niveau d'une languette de retenue 28.

Selon un mode de réalisation préférentielle, l'extrémité 35 opposée à l'embase 15 de ces languettes de retenue 28 est configurée en forme de harpon de sorte que sa forme tronconique favorise l'engagement du clameau 16 entre lesdites languettes de retenue 28 en assurant leur écartement élastique, tandis que la buté de retenue 34 empêche, au contraire, le retrait de clameau 16, alors emprisonné entre ces butées de retenue 34 et l'embase 15.

Selon encore une autre caractéristique de l'invention, le dispositif de fixation 1 comporte des moyens formant une butée temporaire 36 pour maintenir le clameau 16 dans une position desserrée 37 lorsqu'il est dans sa position inactive 17 d'engagement dans la rainure en T 3.

Substantiellement, ces moyens formant une butée temporaire 36 consistent en au moins une entretoise 38 s'étendant sous l'embase 15 et sur laquelle vient en appui le clameau 16 lorsqu'il est dans sa position inactive 17. Cette entretoise 38 est ainsi positionnée pour s'effacer au passage du clameau 16 lorsqu'il est en position active 18, pour lui permettre d'agir en serrage.

Tel que représenté dans les figures des dessins ci-joints et en particulier dans la figure 5, depuis l'embase 15 peuvent s'étendre deux entretoises 38 disposées de manière symétrique de part et d'autre de l'ouverture 32. La hauteur de ces entretoises 38 est définie de telle sorte qu'une fois la ferrure 2 positionnée sur la rainure en T 3, on soit certain que le clameau 16 puisse, par rotation en quittant la position inactive 17 pour atteindre la position active 18, s'étendre sous les rebords d'accrochage 8, 9. Ce n'est d'ailleurs qu'en ayant atteint la position active 18 que le clameau 16 peut échapper aux entretoises formant butées 38 pour pouvoir se resserrer contre ces rebords d'accrochage 8,9 sous l'action de la vis de serrage 26.

Selon encore une autre particularité de la présente invention, le dispositif de fixation comporte des moyens intercalaires d'isolation 39 définis pour venir s'interposer entre le clameau 16 et les rebords d'accrochage 8, 9.

Selon un mode de réalisation avantageux, ces moyens intercalaires d'isolation 39 consistent en des jupes déformables 40, 41 s'étendant sous l'embase 15, de part et d'autre du plan médian longitudinal 42 des moyens de prémontage et prépositionnement 11.

De telles jupes 40, 41 sont illustrées dans les figures 8 et 9 des dessins ci-joints. Dans la position inactive 17 du clameau 16, ces jupes 40, 41 s'étendent perpendiculairement sous l'embase 15 de telle sorte que le clameau 16, dans cette position inactive 17, se positionne entre lesdites jupes 40,41. A noter que l'écartement des jupes 40, 41 est défini de manière ajustée à la largeur de passage 22 entre les rebords d'accrochage 8, 9, de manière à ne pas gêner le passage entre ces derniers de dispositif de fixation 1, plus particulièrement des moyens de prémontage et prépositionnement 11 et des moyens de serrage 16.

Par rotation du clameau 16 pour atteindre sa position active 18 et sous l'effet du serrage, lesdites jupes 40, 41 se replient sous les rebords d'accrochage 8,9 en isolant par rapport à ces derniers le clameau 16.

A noter que lesdites jupes 40, 41 peuvent être pourvues d'une extrémité libre 43 repliées en direction du plan médian longitudinal 42. Ainsi, lors du serrage et pliage des jupes 40, 41 ces extrémité repliées 43 de ces jupes 40, 41 viennent isoler le clameau 16 au niveau de sa périphérie 29, par rapport aux parois latérales 6, 7 de la rainure en T 3 avec lesquelles il peut entrer en contact lorsque il est pivoté en position active 18.

A noter, d'ailleurs, que ces extrémités repliées 43 des jupes 40, 41 peuvent constituer un mode de réalisation alternatif ou complémentaire aux moyens de réception et de maintien 33 du clameau 16 sur les moyens de prémontage et prépositionnement 11.

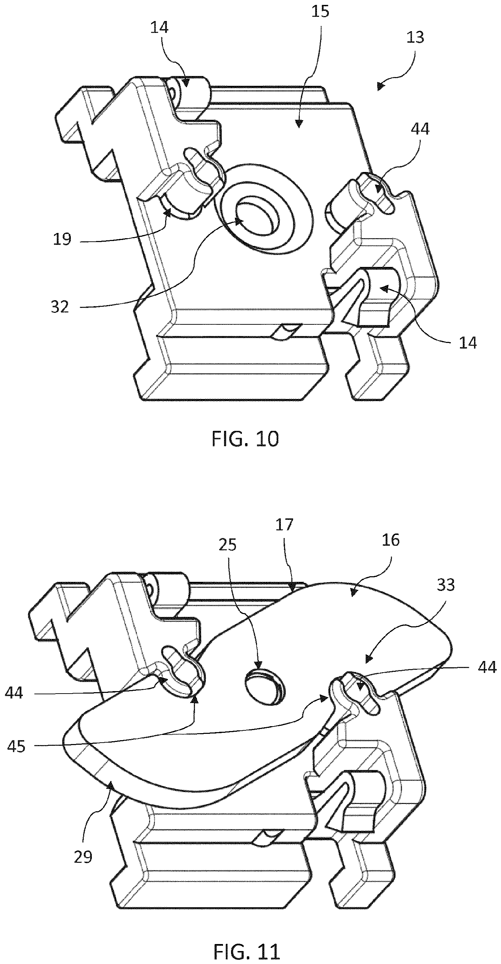

Les figures 10 et 11 représentent un second mode de réalisation non couvert par l'invention. Là encore les moyens de prémontage et prépositionnement 11 comportent au moins un embout d'emboîtement 13 pourvu, au moins d'un côté, préférentiellement de part et d'autre, d'au moins un ergot de retenue 14 susceptible de s'effacer élastiquement sous l'impulsion d'un rebord d'accrochage 8, 9 au moment de l'engagement, entre lesdits rebords d'accrochage 8, 9 de la rainure 3, de cet embout d'emboîtement 13. Au contraire, ces ergot de retenue 14 s'étendent sous ces rebord d'accrochage 8,9 une fois l'embout d'emboîtement 13 convenablement engagé dans la rainure en T 3, notamment lorsque la ferrure 2 est amenée en appui sur cette dernière.

Cet embout d'emboîtement 13, avantageusement en matière synthétique, est rapporté par sertissage, collage, voir par clipage comme souhaite l'illustrer ce mode de réalisation, sous la ferrure 2, en l'occurrence sous la têtière.

Ce second mode de réalisation illustre des moyens de retenue escamotable 19 du clameau 16 dans sa position inactive 17, ceci selon une forme d'exécution.

Ainsi, comme précédemment, le clameau, 16 se présente sous forme d'un écrou 20 sensiblement rectangulaire, répondant aux contraintes d'engagement dans la rainure en T 3 et comportant un trou taraudé 25 pour la réception d'une vis de serrage, non visible sur ces figures 10 et 11.

Les moyens de retenue en rotation escamotables 19 équipent l'embase 15 et adoptent, ici, la forme d'au moins un clips 44 élastiquement compressible apte à venir s'engager sous contrainte élastique dans une encoche 45 que comporte le clameau 16, sensiblement au niveau de son chant périphérique 29, ceci lorsque ce clameau 16 est dans sa position inactive 17. Ainsi, un effort de rotation volontairement appliqué sur le clameau 16 conduit au dégagement de ces encoches 45 par rapport aux clips 44, permettant au clameau 16 de gagner sa position active 17.

Là également, le couple de rotation imprimé au clameau 16 peut résulter d'une contrainte de vissage de la vis de serrage 26 dans le trou taraudé 25, ceci comme décrit à propos du mode de réalisation correspondant aux figures 1 à 6.

De manière avantageuse, cette même contrainte de vissage permet, après desserrage, d'assurer l'entrainement en rotation du clameau 16 depuis sa position active 16 dans sa position inactive 17, dans laquelle ce clameau 16 peut passer entre les rebords d'accrochage 8, 9 pour autoriser le retrait de la ferrure 2 par rapport à la rainure en T 3.

Les moyens de prémontage et prépositionnement 11 sont avantageusement, de configuration symétrique par rapport à l'ouverture 32 dans l'embase 15 servant au passage à la vis de serrage 26.

Du fait de cette configuration symétrique, l'embase 15 comporte au moins deux clips 44 assurant un maintien du clameau 16 de part et d'autre.

Ce ou ces clips 44 définissent des moyens de réception et de maintien 33 du clameau 16 ayant pour fonction essentielle de pouvoir retenir celui-ci en position inactive 17 sur les moyens de prémontage et prépositionnement 11 et le solidariser de ces derniers indépendamment de la vis de serrage 26.

Comme il ressort de la description qui précède, la présente invention apporte une solution efficace aux inconvénients des dispositifs de fixation mettant en œuvre des moyens de serrage sous forme de clameau.

Non seulement le dispositif de fixation 1, selon l'invention, permet un prépositionnement et un maintien d'une ferrure au niveau d'une rainure en T avant qu'intervienne l'action des moyens de fixation proprement dits, mais il peut être pré équipé du clameau 16, de manière à former un ensemble susceptible d'être rapporté sur la ferrure avant que celle-ci ne soit équipée d'une quelconque vis de serrage 26.

De plus, grâce à la solution selon l'invention, l'opérateur peut, non seulement, s'assurer du bon positionnement du clameau autorisant un montage aisé de la ferrure sur la rainure en T, mais, en outre, que ce clameau s'engagera sous les rebords d'accrochage pour lui permettre d'exercer sa fonction de serrage de manière efficace.

L'invention a également su répondre à la problématique du pont thermique que constitue, généralement, des moyens de fixation par clameau de type métallique.

Finalement, telle qu'elle ressort de la description qui précède, la présente invention constitue un net progrès dans le domaine des dispositifs de fixation de ferrure sur rainure en T de profilés de menuiserie métalliques ou en matériau synthétique.

## Revendications

1. Dispositif 1 pour la fixation d'une ferrure 2 dans une rainure en T 3 d'une menuiserie de type cadre dormant ou ouvrant, rainure en T 3 délimitée par au moins un fond 5 et deux parois latérales 6, 7 pourvues, chacune, d'au moins un rebord d'accrochage 8, 9 distant du fond 5, ce dispositif 1 comprenant :
- des moyens de prémontage et prépositionnement 11 par clippage, dans ladite rainure en T 3 perpendiculairement à l'axe de cette dernière, pour assurer un maintien au moins temporaire de la ferrure 2 dans cette rainure 3 au moins suivant cette direction d'emboîtement 12 perpendiculaire dans cette dernière ;
- des moyens de serrage sous forme d'un clameau 16, pour coopérer avec lesdits rebords d'accrochage 8, 9, ce clameau 16, avec lequel est amenée à coopérer une vis de serrage 26, étant susceptible d'occuper au moins une première position inactive 17 autorisant son engagement entre ces rebords d'accrochage 8, 9 et au moins une seconde position active 18 dans laquelle ce clameau 16 s'étend sous lesdits rebords d'accrochage 8, 9,
- et des moyens de retenue en rotation escamotables 19 du clameau 16 dans ladite première position inactive 17 ;
**caractérisé en ce qu'**il comporte des moyens intercalaires d'isolation 39 définis pour venir s'interposer entre le clameau 16 et les rebords d'accrochage 8 dans la position active 18, ces moyens intercalaires d'isolation 39 consistant en des jupes déformables 40, 41 s'étendant sous une embase 15, de part et d'autre du plan médian longitudinal 42 des moyens de prémontage et prépositionnement 11.

2. Dispositif selon la revendication 1, **caractérisé en ce que** les moyens de prémontage et prépositionnement 11 assurent le maintien de cette ferrure 2 longitudinalement dans la rainure en T 3.

3. Dispositif selon la revendication 1 ou 2, **caractérisé en ce que** les moyens de prémontage et prépositionnement 11 comportent au moins un embout d'emboîtement 13 pourvu, au moins d'un côté, préférentiellement de part et d'autre, d'au moins un ergot de retenue 14 susceptible de s'effacer élastiquement sous l'impulsion des rebords d'accrochage 8, 9 au moment de l'engagement, entre ces derniers, dudit l'embout d'emboîtement 13 et s' étendre sous un rebord d'accrochage 8, 9 une fois l'embout d'emboîtement 13 engagé dans la rainure en T 3.

4. Dispositif selon l'une quelconque des revendications précédentes, **caractérisé en ce que** les moyens de prémontage et prépositionnement 11 comportent ladite embase 15 de fixation sous la ferrure 2 pourvu desdits moyens de retenue en rotation escamotable 19 définis pour maintenir le clameau 16 dans sa position inactive 17.

5. Dispositif selon l'une quelconque des revendications précédentes, **caractérisé en ce que** les moyens de prémontage et prépositionnement 11 comportent encore des moyens de réception et de maintien 33 pour solidariser le clameau 16 au moins dans sa position inactive 17 sur ces moyens de prémontage et prépositionnement 11, indépendamment de la vis de serrage 26.

6. Dispositif selon l'une quelconque des revendications précédentes, **caractérisé en ce qu'**il comporte des moyens formant une butée temporaire 36 pour maintenir le clameau 16 dans une position desserrée 37, dans sa position inactive 17 d'engagement dans la rainure en T 3.

7. Dispositif selon les revendications 4 et 6, **caractérisé en ce que** les moyens formant une butée temporaire 36 consistent en au moins une entretoise 38 s'étendant sous l'embase 15 et sur laquelle vient en appui le clameau 16 lorsqu'il est dans sa position inactive 17.

8. Dispositif selon l'une quelconque des revendications précédentes, **caractérisé en ce que** les moyens de retenue en rotation escamotables 19 comprennent au moins une languette de retenue 28 définie pour coopérer avec la périphérie 29 du clameau 16.

9. Dispositif selon les revendications 5 et 8, **caractérisé en ce que** les moyens de réception et de maintien 33 sont constitués par au moins deux languettes de retenue 28 agissant sensiblement de manière diamétralement opposée sur le clameau 16 et par au moins une butée de retenue 34 susceptible de s'opposer au dégagement de ce clameau 16 par rapport aux moyens de prémontage et prépositionnement 11.

10. Dispositif selon l'une quelconque des revendications 1 à 7, **caractérisé en ce que** les moyens de retenue en rotation escamotables 19 adoptent la forme d'au moins un clips 44 élastiquement compressible apte à venir s'engager sous contrainte élastique dans une encoche 45 que comporte le clameau 16, sensiblement au niveau de son chant périphérique 29, ceci lorsque ce clameau 16 est dans sa position inactive 17.

11. Dispositif selon les revendications 5 et 10, **caractérisé en ce que** ce ou ces clips 44 définissent les moyens de réception et de maintien 33 pour solidariser le clameau 16 au moins dans sa position inactive 17 sur ces moyens de prémontage et prépositionnement 11.

12. Dispositif selon l'une des revendications précédentes, **caractérisé en ce que** lesdites jupes 40, 41 sont pourvues d'une extrémité libre 43 repliées en direction du plan médian longitudinal 42.

13. Dispositif selon les revendications 5 et 12, **caractérisé en ce que** les moyens de réception et de maintien 33 du clameau 16 sur les moyens de prémontage et prépositionnement 11 sont constituées par les extrémités repliées 43 des jupes 40, 41.

14. Dispositif selon l'une quelconque des revendications précédentes, **caractérisé en ce que** les moyens de prémontage et prépositionnement 11 adoptent une configuration symétrique par rapport à une ouverture 32 dans une embase 15 de passage d'une vis de serrage 26.

## Patentansprüche

1. Vorrichtung 1 zum Fixieren eines Beschlags 2 in einer T-Nut 3 einer Holzarbeit einer Art eines ruhenden oder beweglichen Rahmens, wobei die T-Nut 3 durch mindestens einen Boden 5 und zwei Seitenwände 6, 7 begrenzt ist, die jeweils mit mindestens einem von dem Boden 5 entfernten Einrastrand 8, 9 versehen sind, diese Vorrichtung 1 umfassend:
- Vormontage- und Vorpositionierungsmittel 11 durch Clipsen in die T-Nut 3 senkrecht zu der Achse dieser letzteren, zum Gewährleisten eines Haltens mindestens vorübergehend des Beschlags 2 in dieser Nut 3 mindestens entlang dieser Einsteckrichtung 12 senkrecht in dieser letzteren;
- Klemmmittel in Form einer Klammer 16 zum Zusammenwirken mit den Einrasträndern 8, 9, wobei diese Klammer 16, mit der eine Klemmschraube 26 veranlasst wird, zusammenzuwirken, geeignet ist, um mindestens eine erste inaktive Position 17, die ihren Eingriff zwischen diesen Einrasträndern 8, 9 ermöglicht, und mindestens eine zweite aktive Position 18 einzunehmen, in der sich diese Klammer 16 unter den Einrasträndern 8, 9 erstreckt,
- und einziehziehbare Rotationsrückhaltemittel 19 der Klammer 16 in der ersten inaktiven Position 17;
**dadurch gekennzeichnet, dass** sie Zwischenisolationsmittel 39 aufweist, die zum Treten zwischen die Klammer 16 in der aktiven Position 18 und die Einrastränder 8 definiert sind, wobei diese Zwischenisolationsmittel 39 aus verformbaren Schürzen 40, 41 bestehen, die sich unter einer Basis 15 auf beiden Seiten der Längsmittelebene 42 der Vormontage-und Vorpositionierungsmittel 11 erstrecken.

2. Vorrichtung nach Anspruch 1, **dadurch gekennzeichnet, dass** die Vormontage- und Vorpositionierungsmittel 11 das Halten dieses Beschlags 2 in der T-Nut 3 in Längsrichtung gewährleisten.

3. Vorrichtung nach Anspruch 1 oder 2, **dadurch gekennzeichnet, dass** die Vormontage-und Vorpositionierungsmittel 11 mindestens ein Einsteckendstück 13 aufweisen, das mindestens auf einer Seite, vorzugsweise auf beiden Seiten, mit mindestens einer Rückhaltenase 14 versehen ist, die geeignet ist, um sich unter dem Impuls der Einrastränder 8, 9 zu dem Zeitpunkt des Eingriffs zwischen den letzteren, des Einsteckendstücks 13 elastisch zurückzuziehen und sich unter einem Einrastrand 8, 9 zu erstrecken, sobald das Einsteckendstück 13 in die T-Nut 3 eingreift.

4. Vorrichtung nach einem der vorstehenden Ansprüche, **dadurch gekennzeichnet, dass** die Vormontage- und Vorpositionierungsmittel 11 die Fixierbasis 15 unter dem Beschlag 2 aufweisen, die mit den einziehbaren Rotationsrückhaltemitteln 19 versehen ist, die zum Halten der Klammer 16 in ihrer inaktiven Position 17 definiert sind.

5. Vorrichtung nach einem der vorstehenden Ansprüche, **dadurch gekennzeichnet, dass** die Vormontage- und Vorpositionierungsmittel 11 außerdem Aufnahme- und Haltemittel 33 zum Befestigen der Klammer 16 mindestens in ihrer inaktiven Position 17 an diesen Vormontage- und Vorpositionierungsmitteln 11 unabhängig von der Klemmschraube 26 aufweisen.

6. Vorrichtung nach einem der vorstehenden Ansprüche, **dadurch gekennzeichnet, dass** sie Mittel aufweist, die einen vorübergehenden Anschlag 36 zum Halten der Klammer 16 in einer gelockerten Position 37 in ihrer inaktiven Eingriffsposition 17 in der T-Nut 3 ausbilden.

7. Vorrichtung nach den Ansprüchen 4 und 6, **dadurch gekennzeichnet, dass** die Mittel, die einen vorübergehenden Anschlag 36 ausbilden, aus mindestens einem Abstandsstück 38 bestehen, das sich unter der Basis 15 erstreckt und an dem die Klammer 16 anliegt, wenn sie in ihrer inaktiven Position 17 ist.

8. Vorrichtung nach einem der vorstehenden Ansprüche, **dadurch gekennzeichnet, dass** die einziehbaren Rotationsrückhaltemittel 19 mindestens einen Rückhaltelappen 28 umfassen, der zum Zusammenwirken mit dem Umfang 29 der Klammer 16 definiert ist.

9. Vorrichtung nach den Ansprüchen 5 und 8, **dadurch gekennzeichnet, dass** die Aufnahme- und Haltemittel 33 aus mindestens zwei Rückhaltelappen 28, die im Wesentlichen auf diametral gegenüberliegende Weise auf die Klammer 16 einwirken, und aus mindestens einem Rückhalteanschlag 34 bestehen, der geeignet ist, um sich dem Lösen dieser Klammer 16 relativ zu den Vormontage- und Vorpositionierungsmitteln 11 zu widersetzen.

10. Vorrichtung nach einem der Ansprüche 1 bis 7, **dadurch gekennzeichnet, dass** die einziehbaren Rotationsrückhaltemittel 19 die Form mindestens eines elastisch komprimierbaren Clips 44 annehmen, der fähig ist, um unter elastischer Spannung in eine Kerbe 45 einzugreifen, die von der Klammer 16 aufgewiesen wird, im Wesentlichen an ihrer Umfangskante 29, das dann erfolgt, wenn diese Klammer 16 in ihrer inaktiven Position 17 ist.

11. Vorrichtung nach den Ansprüchen 5 und 10, **dadurch gekennzeichnet, dass** dieser Clip oder diese Clips 44 die Aufnahme- und Haltemittel 33 zum Befestigen der Klammer 16 mindestens in ihrer inaktiven Position 17 an diesen Vormontage- und Vorpositionierungsmitteln 11 definieren.

12. Vorrichtung nach einem der vorstehenden Ansprüche, **dadurch gekennzeichnet, dass** die Schürzen 40, 41 mit einem freien Ende 43 versehen sind, die in Richtung der Längsmittelebene 42 umgebogen sind.

13. Vorrichtung nach den Ansprüchen 5 und 12, **dadurch gekennzeichnet, dass** die Aufnahme- und Haltemittel 33 der Klammer 16 an den Vormontage- und Vorpositionierungsmitteln 11 aus den umgebogenen Enden 43 der Schürzen 40, 41 bestehen.

14. Vorrichtung nach einem der vorstehenden Ansprüche, **dadurch gekennzeichnet, dass** die Vormontage- und Vorpositionierungsmittel 11 eine symmetrische Konfiguration relativ zu einer Öffnung 32 in einer Durchgangsbasis 15 einer Klemmschraube 26 annehmen.

## Claims

1. Device 1 for securing a fitting 2 in a T-shaped groove 3 of an outer fixed frame or opening panel type of joinery, the T-shaped groove 3 being delimited by at least one bottom 5 and two side walls 6, 7 each provided with at least one hooking flange 8, 9 remote from the bottom 5, said device 1 comprising:
- means 11 for pre-assembly and pre-positioning by clipping, in said T-shaped groove 3 perpendicularly to the axis thereof, in order to ensure at least temporary holding of the fitting 2 in this groove 3 at least in this perpendicular interlocking direction 12 in the latter;
- clamping means in the form of a nut plate 16, for interacting with said hooking flanges 8, 9, said nut plate 16, with which a clamping screw 26 is caused to interact, being capable of occupying at least a first inactive position 17 which allows its engagement between said hooking flanges 8, 9, and at least a second active position 18 in which said nut plate 16 extends under said hooking flanges 8, 9,
- and retractable means 19 for rotational retention of the nut plate 16 in said first inactive position 17;
**characterized in that** it comprises intermediate insulation means 39 intended to be interposed between the nut plate 16 and the hooking flanges 8 in the active position 18, said intermediate insulation means 39 consisting of deformable skirts 40, 41 extending under a base 15, on either side of the longitudinal median plane 42 of the pre-assembly and pre-positioning means 11.

2. Device according to claim 1, **characterized in that** the pre-assembly and pre-positioning means 11 ensure that this fitting 2 is held longitudinally in the T-shaped groove 3.

3. Device according to claim 1 or 2, **characterized in that** the pre-assembly and pre-positioning means 11 comprise at least one interlocking end piece 13 provided, at least on one side, preferably on both sides, with at least one retaining lug 14 capable of yielding elastically under the impetus of the hooking flanges 8, 9 at the time of engagement, between the latter, of said interlocking end piece 13 and capable of extending under a hooking flange 8, 9 once the interlocking end piece 13 is engaged in the T-shaped groove 3.

4. Device according to any of the preceding claims, **characterized in that** the pre-assembly and pre-positioning means 11 comprise said securing base 15 under the fitting 2 provided with said retractable rotational retention means 19 intended to hold the nut plate 16 in its inactive position 17.

5. Device according to any of the preceding claims, **characterized in that** the pre-assembly and pre-positioning means 11 further comprise receiving and holding means 33 for rigidly connecting the nut plate 16, at least in its inactive position 17, to said pre-assembly and pre-positioning means 11, independently of the clamping screw 26.

6. Device according to any of the preceding claims, **characterized in that** it comprises means forming a temporary stop 36 for holding the nut plate 16 in a released position 37, in its inactive position 17 of engagement in the T-shaped groove 3.

7. Device according to claims 4 and 6, **characterized in that** the means forming a temporary stop 36 consist of at least one spacer 38 which extends under the base 15 and on which the nut plate 16 rests when it is in its inactive position 17.

8. Device according to any of the preceding claims, **characterized in that** the retractable rotational retention means 19 comprise at least one retaining tab 28 intended to interact with the periphery 29 of the nut plate 16.

9. Device according to claims 5 and 8, **characterized in that** the receiving and holding means 33 consists of at least two retaining tabs 28 acting substantially in a diametrically opposed manner on the nut plate 16 and of at least one retaining stop 34 capable of opposing the disengagement of this nut plate 16 with respect to the pre-assembly and pre-positioning means 11.

10. Device according to any of claims 1 to 7, **characterized in that** the retractable rotational retention means 19 take the form of at least one elastically compressible clip 44 which is capable of engaging under elastic stress in a notch 45 which the nut plate 16 comprises, substantially at its peripheral edge 29, this taking place when said nut plate 16 is in its inactive position 17.

11. Device according to claims 5 and 10, **characterized in that** said clip(s) 44 define the receiving and holding means 33 for rigidly connecting the nut plate 16 at least in its inactive position 17 to said pre-assembly and pre-positioning means 11.

12. Device according to any of the preceding claims, **characterized in that** said skirts 40, 41 are provided with a free end 43 bent in the direction of the longitudinal median plane 42.

13. Device according to claims 5 and 12, **characterized in that** the means 33 for receiving and holding the nut plate 16 on the pre-assembly and pre-positioning means 11 consist of the bent ends 43 of the skirts 40, 41.

14. Device according to any of the preceding claims, **characterized in that** the pre-assembly and pre-positioning means 11 adopt a symmetrical configuration with respect to an opening 32 in a base 15 for passage of a clamping screw 26.
